# FASCICULE DE BREVET EUROPEEN

(11) **EP 0 565 422 B1**
(45) Date de publication et mention de la délivrance du brevet: **12.06.1996**
(21) Numéro de dépôt: 93400877.2
(22) Date de dépôt: 05.04.1993
(51) Int. Cl.: B60Q 1/068

(54) **Dispositif de montage d'une partie de projecteur de véhicule automobile**
Montageeinrichtung für ein Teil eines Kraftfahrzeugscheinwerfers
Fitting device for a part of vehicle headlamp

(30) Priorité: 06.04.1992 FR 9204164
(43) Date de publication de la demande: 13.10.1993
(73) Titulaire: VALEO VISION, 93000 Bobigny (FR)
(72) Inventeur: Pinson, Ghislaine, F-92390 Villeneuve-La-Garenne (FR)
(74) Mandataire: Martin, Jean-Jacques

(56) Documents cités:
- FR-A- 2 351 350
- FR-A- 2 463 311
- FR-A- 2 543 894
- US-A- 4 974 123

## Description

La présente invention concerne de façon générale l'assemblage mécanique de pièces, et plus particulièrement un nouveau dispositif de montage utilisable notamment pour monter un réflecteur de projecteur de véhicule automobile sur un boîtier de projecteur, ou encore un boîtier ou une platine de dispositif d'éclairage ou de signalisation sur une carrosserie.

Actuellement, on connaît de l'état de la technique un dispositif de montage d'un réflecteur sur un boîtier de projecteur, du type comprenant une tige montée sur ledit boîtier et comportant à une extrêmité une tête sphérique qui vient se cloquer de face dans un logement anti-retour monté sur l'arrière du réflecteur. Ce dispositif de montage est notamment utilisé à chaque point de montage d'un ensemble de montage en trois points, bien connu, utilisé pour assembler un réflecteur avec un boîtier de projecteur en permettant le réglage du réflecteur en site et en azimut par déplacement longitudinal de deux des trois têtes. Nous rappelons qu'un ensemble de montage en trois points comporte trois points de montage disposés respectivement aux trois sommets d'un triangle rectangle.

Un inconvénient de l'ensemble de montage précité réside dans le fait qu'il faut simultanément et parfaitement positionner les têtes face aux logements pour assurer un cloquage correct. Lorsqu'une tête de vis ne se trouve pas exactement face audit logement, il n'est pas possible de cloquer celle-ci dans le logement sans risquer de tordre ou même de briser des parties définissant le logement. En effet, il est très difficile de cloquer en même temps de face, les trois têtes de vis dans les trois logements anti-retour disposés en triangle. Dans de nombreux cas, on cloque en même temps deux têtes de vis sur trois, la troisième tête étant alors cloquée par la suite de biais, avec le risque précité.

Le document US - A 4 974 123 décrit un dispositif de montage qui comprend une tige munie d'une tête sphérique, et un moyen de retenue complexe qui comporte :
- une platine comprenant un logement de support de la tête sphérique de la tige, la platine étant pourvue d'une ouverture frontale pour la mise en place de la tête sphérique dans le logement de support,
- un verrou de maintien de la tête sphérique positionnée dans le logement de support, qui comporte une tige de montage montée pivotante autour d'un axe parallèle à l'axe passant par le centre de l'ouverture frontale de la platine, une surface de retenue destinée à s'appliquer sur la tête sphérique, et une vis de blocage apte à être engagée dans des trous complémentaires du verrou et de la platine pour verrouiller l'ensemble.

La document FR-A-2 351 350 divulgue une dispositif de montage pour un projecteur, suspendu par trois tiges à têtes sphériques, gui permet un montage dans la carrosserie par translation grâce à des logements ouverts latéralement coopérant avec des têtes sphériques.
Pour la fixation du dispositif, il est prévu une clef de verrouillage utilisée avec un ressort hélicoïdal.

Ce document forme la préambule de la revendication 1.

Afin de pallier ces inconvénients, la présente invention propose un dispositif de montage d'une partie d'un dispositif d'éclairage ou de signalisation d'un véhicule automobile, tel qu'un réflecteur, sur une autre partie, telle qu'un boîtier de projecteur, du type comprenant au moins une tige montée sur une des deux parties, comportant une tête essentiellement sphérique, et au moins un moyen de retenue monté sur l'autre partie, comportant un logement essentiellement complémentaire de la tête, le dispositif de montage étant caractérisé en ce que le logement est ouvert transversalement pour recevoir la tête et en ce que ledit moyen de retenue peut pivoter autour d'un axe passant essentiellement au centre dudit logement entre une position permettant la mise en place de la tête dans ledit logement et une position de retenue de la tête dans le logement.

Ainsi, en utilisant le dispositif de montage selon l'invention, on assemble facilement un réflecteur avec un boîtier de projecteur, en introduisant transversalement la tête sphérique de la tige, montée par exemple sur le boîtier, dans le logement du moyen de retenue, par son ouverture transversale. Par la suite, il suffit alors de faire pivoter ledit moyen de retenue pour que le logement se trouve dans une position de retenue de ladite tête.

Suivant un mode de réalisation, le dispositif de montage selon l'invention comporte un élément de verrouillage venant se clipser sur ledit moyen de retenue dans sa position de retenue, de manière à fermer l'ouverture transversale dudit logement contenant la tête.

De préférence, selon l'invention, l'élément de verrouillage comprend une bride de raccordement se terminant par une boucle de maintien glissée sur la tige afin de lier ledit élément de verrouillage à ladite tige et d'éviter de le perdre.

Par ailleurs, l'invention propose également un ensemble de montage en trois points d'une partie d'un dispositif d'éclairage ou de signalisation d'un véhicule automobile sur une autre partie, comportant au moins deux dispositifs de montage conforme à l'invention, les ouvertures transversales des logements desdites parties de retenue étant capables d'occuper des positions angulaires différentes en position de retenue.

Suivant un mode de réalisation de l'ensemble de montage en trois points précité, le troisième point de montage est un dispositif de montage fixe comprenant d'une part une tige montée sur une des parties à fixer, comportant une tête sphérique, et d'autre part un moyen de retenue monté fixement sur l'autre partie et, comportant un logement ouvert transversalement pour recevoir la tête.

Ainsi, à l'aide de l'ensemble de montage en trois points conforme à l'invention, on monte rapidement une partie d'un dispositif d'éclairage ou de signalisation d'un véhicule sur une autre partie, en procédant selon les étapes suivantes :
a) on amène les têtes sphériques dans un plan contenant les trois logements,
b) on introduit transversalement lesdites têtes dans lesdits logements par leur ouverture transversale,
c) on tourne au moins deux moyens de retenue de telle sorte que les ouvertures transversales des trois logements présentent des orientations différentes.

La description qui va suivre en regard des dessins annexés, donnés à titre d'exemples non limitatifs, fera bien comprendre en quoi consiste l'invention et comment elle peut être réalisée.
- La figure 1 est un schéma en perspective du dispositif de montage selon l'invention.
- La figure 2 est un schéma en perspective d'une variante du dispositif de la figure 1, le moyen de retenue étant dans la position de mise en place de la tête sphérique.
- La figure 3 est une vue en plan de côté du dispositif de la figure 2.
- La figure 4 est un schéma en perspective d'un ensemble de montage en trois points selon l'invention.
- La figure 5 est un schéma explicatif de la mise en place de l'ensemble de montage de la figure 4.

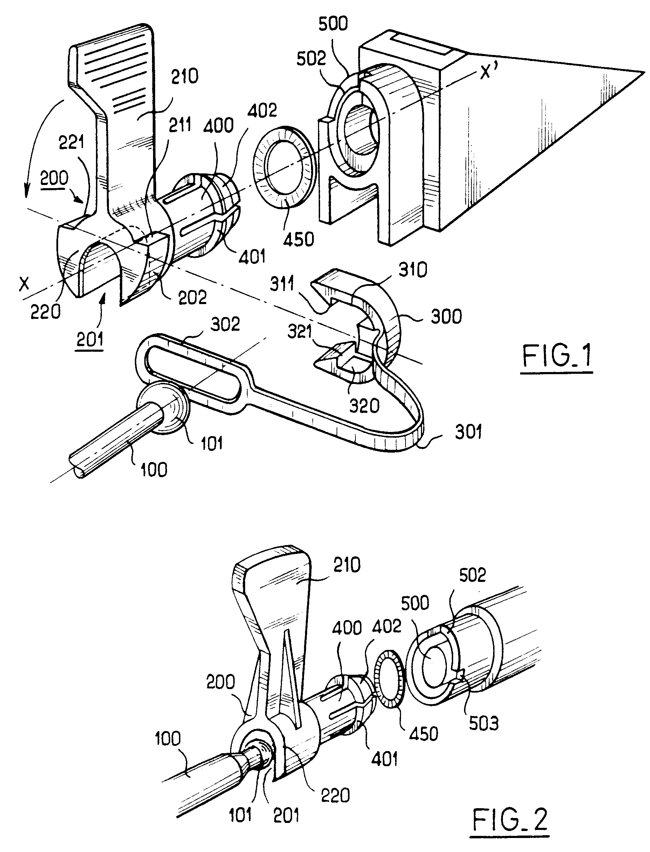

En référence tout d'abord à la figure 1, on a représenté un dispositif de montage selon l'invention. Ce dispositif de montage est utilisable notamment pour monter un réflecteur de projecteur d'un véhicule automobile sur un boîtier.

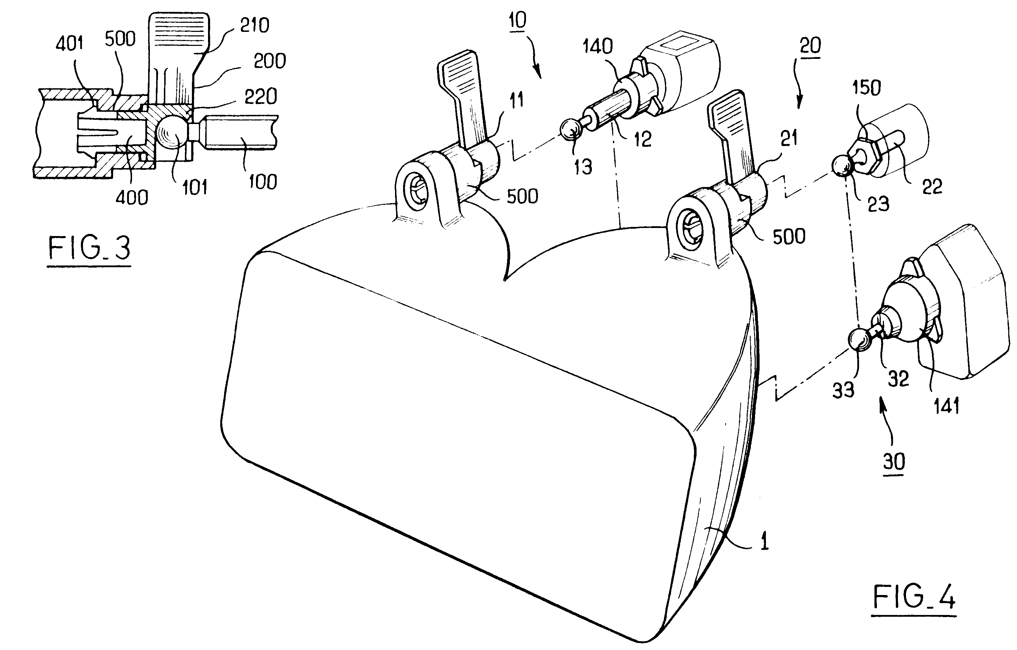

Le dispositif de montage de la figure 1 comprend une tige 100 comportant une tête 101 essentiellement sphérique. Dans un exemple typique, cette tige 100 comporte un filetage extérieur non représenté et est vissée sur le boîtier optique du projecteur également non représenté, de manière à être réglable en longueur. En outre, ledit dispositif de montage comprend un moyen de retenue 200 comportant un logement 201 essentiellement complémentaire de la tête 101. Ce logement 201 est une cavité essentiellement sphérique comportant une ouverture transversale pour recevoir la tête 101 et une ouverture frontale plus étroite, permettant le passage de la tige 100 elle-même plus étroite que la tête sphérique 101. En particulier, le logement présente une forme de U renversé avec une ouverture débouchant vers le bas en position de réception de la tête 101. Par ailleurs, le moyen de retenue 200 peut pivoter autour d'un axe X - X' passant essentiellement au centre du logement 201, entre une position permettant la mise en place de la tête 101, comme le montrent mieux les figures 2 et 3, et une position de retenue de la tête 101 dans le logement 201. Plus particulièrement comme le montre la figure 1, le moyen de retenue 200 présente une forme de clé comprenant un manche de pivotement 210 et un embout de retenue 220 comportant le logement 201 en forme de U renversé. Le moyen de retenue est solidaire d'un arbre d'assemblage 400 à quatre branches, d'axe essentiellement parallèle à la tige 100, chaque branche comportant au voisinage de son extrêmité libre 102 une dent de clipsage 401, de sorte que cet arbre d'assemblage 400 est clipsé de manière à pouvoir tourner dans un palier 500 prévu par exemple sur l'arrière du réflecteur. Un joint annulaire 450 constitué par un matériau souple type élastomère est placé entre l'arbre d'assemblage 400 et la paroi cylindrique dudit palier 500 de manière à combler le jeu d'assemblage pouvant exister entre ledit arbre et ladite paroi. En outre, le palier 500 comporte une encoche 502 s'étendant environ sur un quart de cercle et coopérant avec le manche de pivotement 210 lorsque l'arbre d'assemblage 400 est clipsé dans ledit palier 500. Cette encoche 502 permet de limiter, par exemple à 90° le pivotement angulaire du moyen de retenue 200.

Suivant le mode de réalisation du dispositif de montage représenté sur la figure 1, ledit dispositif comporte un élément de verrouillage 300 qui vient se clipser sur le moyen de retenue 200, de manière à fermer l'ouverture transversale du logement 201 contenant la tête 101 et placé en position de retenue. Cet élément de verrouillage 300 présente une forme essentiellement en U comportant sur les faces intérieures de ses deux branches 310,320 respectivement deux dents d'accrochage 311,321 coopérant chacune avec un plat 211,221 prévu sur le moyen de retenue 200, et plus particulièrement sur l'embout de retenue 220. En outre, l'élément de verrouillage 300 comprend une bride de raccordement 301 se terminant par une boucle de maintien 302 glissée sur la tige 100 afin de lier ledit élément de verrouillage 300 à la tige 100 et de ne pas le perdre.

Sur les figures 2 et 3, on a représenté une variante du mode de réalisation du dispositif de la figure 1. Suivant cette variante, le moyen de retenue 200 en forme de clé ne comporte pas de plat de clipsage sur l'embout de retenue 220. Par ailleurs, comme on peut mieux le voir sur la figure 2, l'encoche 502 du palier 500 comporte à son extrêmité correspondant, à la position verrouillée du moyen de retenue 200, un profil en rampe tel que le manche de pivotement 210 vient s'enclencher dans un renfoncement de verrouillage 503, le joint élastique 450 comprimé assurant le maintien de cet enclenchement.

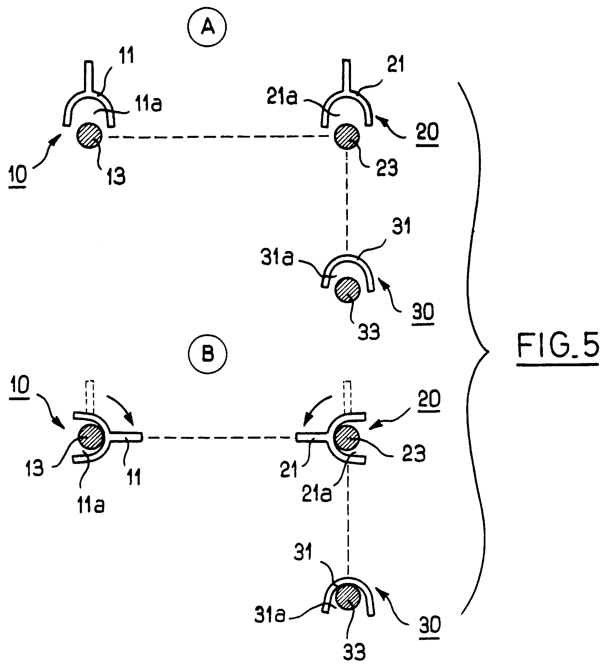

Sur la figure 4, on a représenté un ensemble de montage en trois points d'un réflecteur 1, sur un boîtier de projecteur non représenté. Cet ensemble de montage comporte deux dispositifs de montage 10,20 selon l'invention, dont les parties de retenue 11,21 sont placées à la même hauteur sur la partie arrière du réflecteur 1 et sont capables de pivoter de telle sorte que les ouvertures transversales respectives desdits logements 11ₐ, 21ₐ correspondants occupent des positions angulaires déterminées comme on le verra en détail sur la figure 5. En outre l'ensemble de montage de la figure 4 comporte un dispositif de montage fixe 30 comprenant d'une part une partie de retenue fixe 31 montée sur l'arrière du réflecteur 1 de telle sorte que les trois parties de retenue 11,21,31 soient placées aux sommets d'un triangle, et d'autre part une tige 32 montée sur le boîtier, comportant une tête sphérique 33. La partie de retenue fixe 31 comprend un logement fixe 31ₐ en forme de U renversé ouvert vers le bas. Il convient de préciser que les tiges 12 et 32 vissées sur le boîtier, sont réglables en longueur à l'aide de dispositifs de réglage motorisés 140,141 de manière à régler le positionnement horizontal et vertical dudit réflecteur 1. Par contre la tige 22 est montée fixe sur ledit boîtier à l'aide d'un écrou 150.

Sur la figure 5, on a représenté deux étapes du procédé de montage du réflecteur sur le boîtier du projecteur au moyen de l'ensemble de montage de la figure 4.

A l'étape A, les trois logements 11ₐ,21ₐ,31ₐ sont poisitionnés en position de réception des têtes sphériques, leur ouverture débouchant vers le bas, et on amène les têtes sphériques 13,23,33 dans un plan contenant les trois logements 11ₐ,21ₐ,31ₐ de manière à introduire transversalement, ici par le dessous, en même temps lesdites têtes dans lesdits logements par leur ouverture transversale.

A l'étape B, on tourne dans des sens opposés les deux moyens de retenue 11,21 contenant les têtes, de manière à ce que les ouvertures transversales respectives desdits logements 11ₐ,21ₐ correspondants soient opposées. De cette manière, les ouvertures transversales des trois logements présentent des orientations différentes et il en résulte un blocage axial et transversal des tiges 12,22,32 assurant le montage du réflecteur sur le boîtier du projecteur.
Par la suite, on peut régler l'orientation du réflecteur en ajustant la longueur des tiges 12 et 32.

Bien entendu, la présente invention n'est nullement limitée à la forme de réalisation décrite et représentée, mais l'homme du métier saura y apporter toute variante conforme à son esprit.

## Revendications

1. Dispositif de montage d'une partie d'un dispositif d'éclairage ou de signalisation d'un véhicule automobile, tel qu'un réflecteur, sur une autre partie, telle qu' un boîtier de projecteur, du type comprenant au moins une tige (100) montée sur une des deux parties, comportant une tête (101) essentiellement sphérique, et au moins un moyen de retenue (200) monté sur l'autre partie, comportant un logement (201) essentiellement complémentaire de la tête (101), et ouvert transversalement pour recevoir ladite tête (101) le dispositif de montage étant caractérisé en ce que ledit moyen de retenue (200) peut pivoter autour d'un axe passant essentiellement au centre dudit logement (201), entre une position permettant la mise en place de la tête (101) dans ledit logement (201) et une position de retenue de la tête (101) dans le logement (201).

2. Dispositif de montage selon la revendication 1, caractérisé en ce qu'il comporte un élément de verrouillage (300) venant se clipser sur ledit moyen de retenue (200) dans sa position de retenue, de manière à fermer l'ouverture transversale dudit logement (201) contenant la tête (101).

3. Dispositif de montage selon la revendication 2, caractérisé en ce que l'élément de verrouillage (300) comprend une bride de raccordement (301) se terminant par une boucle de maintien (302) glissée sur la tige (100) afin de lier ledit élément de verrouillage (300) à ladite tige (100).

4. Dispositif de montage selon l'une des revendications 2 ou 3, caractérisé en ce que l'élément de verrouillage (300) présente une forme essentiellement en U comportant sur la face intérieure d'au moins une de ses branches (310,320), une dent d'accrochage (311,321) coopérant avec un plat (211,221) prévue sur le moyen de retenue (200).

5. Dispositif de montage selon l'une des revendications 1 à 4, caractérisé en ce que le moyen de retenue (200) présente une forme de clé comprenant un manche de pivotement (210) et un embout de retenue (220) comportant ledit logement (201).

6. Dispositif de montage selon l'une des revendications 1 à 5, caractérisé en ce que ledit moyen de retenue (200) est fixé sur un arbre d'assemblage (400) d'axe essentiellement parallèle à la tige (100), clipsé de manière à pouvoir tourner dans un palier (500) prévu sur une des deux parties à fixer.

7. Dispositif de montage selon l'une des revendications 1 à 6, caractérisé en ce que le palier (500) comporte une encoche (502) coopérant avec le manche de pivotement (210) et permettant de limiter le pivotement angulaire dudit moyen de retenue (200) entre la position de mise en place et la position de retenue.

8. Dispositif de montage selon la revendication 7, caractérisé en ce que ladite encoche (502) présente à une extrémité un renfoncement (503) assurant le verrouillage dudit moyen de retenue (200) dans sa position de retenue.

9. Ensemble de montage en trois points d'une partie d'un dispositif d'éclairage ou de signalisation d'un véhicule sur une autre partie, caractérisé en ce qu'il comporte au moins deux dispositifs de montage (10,20) selon l'une des revendications 1 à 8, les ouvertures transversales des logements (11ₐ,21ₐ) desdites parties de retenue (11,21) étant capables d'occuper des positions angulaires différentes en position de retenue.

10. Ensemble de montage selon la revendication 9, caractérisé en ce que le troisième point de montage est un dispositif de montage fixe (30) comprenant d'une part une tige (32) montée sur une des parties à fixer, comportant une tête sphérique (33), et d'autre part un moyen de retenue fixe (31) monté sur l'autre partie et, comportant un logement (31ₐ) ouvert transversalement pour recevoir la tête (33).

11. Procédé de montage d'une partie d'un dispositif d'éclairage ou de signalisation d'un véhicule sur une autre partie, au moyen de l'ensemble de montage selon l'une des revendications 9 ou 10, caractérisé en ce qu'il comporte les étapes suivantes:
a) on amène les têtes sphériques dans un plan contenant les trois logements,
b) on introduit transversalement lesdites têtes dans lesdits logements par leur ouverture transversale,
c) on tourne au moins deux moyens de retenue de telle sorte que les ouvertures transversales des trois logements présentent des orientations différentes.

## Claims

1. A device for mounting a part of a motor vehicle lighting or signalling device, such as a reflector, onto another part, such as a headlight housing, the device being of the type including at least one rod (100) mounted on one of the two parts, the rod having an essentially spherical head (101), and at least one retaining means (200) mounted on the other part, the retaining means including a seating (201) which is essentially complementary to the head (101) and open transversely so as to receive said head (101), the mounting device being characterized in that said retaining means (200) can pivot about an axis passing essentially through the center of said seating (201), between a position in which the head (101) can be placed in said seating (201) and a position in which the head (101) is retained in the seating(201).

2. A mounting device according to claim 1, characterized in that it includes a locking element (300) which snaps onto said retaining means (200) in its retaining position, so as to close the transverse opening of said seating (201) which contains the head (101).

3. A mounting device according to claim 2, characterized in that the locking element (300) comprises a connecting strap (301) terminated by a retaining ring (302) which is slid onto the rod (100) so as to join said locking element (300) to said rod (100).

4. A mounting device according to claim 2 or claim 3, characterized in that the locking element (300) is essentially U-shaped and includes on the inside surface of at least one of its arms (310, 320), a hooking tooth (311, 321) which co-operates with a flat (211, 221) provided on the retaining means (200).

5. A mounting device according to any one of claims 1 to 4, characterized in that the retaining means (200) is in the form of a key comprising a pivoting handle (210) and a retaining socket (220) including said seating (201).

6. A mounting device according to any one of claims 1 to 5, characterized in that said retaining means (200) is secured to an assembly shaft (400), the axis of which is essentially parallel to the rod (100), and which is snapped in so as to be able to rotate inside a bearing (500) provided on one of the two parts to be secured.

7. A mounting device according to any one of claims 1 to 6, characterized in that the bearing (500) includes a notch (502) which co-operates with the pivoting handle (210) and allows the angular pivoting of said retaining means (200), between the insertion position and the retaining position, to be limited.

8. A mounting device according to claim 7, characterized in that said notch (502) is provided at one end with a cavity (503) which ensures that said retaining means (200) is locked in its retaining position.

9. A three-point mounting assembly for mounting a part of a motor vehicle lighting or signalling device onto another part, the assembly being characterized in that it comprises at least two mounting devices (10, 20) according to any one of claims 1 to 8, the transverse openings of the seatings (11a, 21a) of said retaining parts (11, 21) being able to occupy different angular positions when in the retaining position.

10. A mounting assembly according to claim 9, characterized in that the third mounting point is a fixed mounting device (30) comprising a rod (32) mounted on one of the parts to be secured, the rod having a spherical head (33), and a retaining means (31) fixedly mounted on the other part and comprising a seating (31a) open transversely so as to receive the head (33).

11. A method of mounting a part of a motor vehicle lighting or signalling device onto another part, using the mounting assembly according to either claim 9 or claim 10, characterized in that it comprises the following steps:
a) the spherical heads are placed in a plane containing the three seatings,
b) said heads are introduced transversely into said seatings via their transverse openings,
c) at least two retaining means are rotated so that the transverse openings of the three seatings have different orientations.

## Patentansprüche

1. Montageeinrichtung für die Montage eines Teils einer Beleuchtungs- oder Signalvorrichtung eines Kraftfahrzeugs, etwa eines Reflektors, an einem anderen Teil, etwa einem Scheinwerfergehäuse, bestehend aus mindestens einer an einem der beiden Teile angebrachten Stange (100) mit einem in etwa kugelförmigen Kopf (101) und aus mindestens einem an dem anderen Teil angebrachten Rückhaltemittel (200) mit einer in etwa formschlüssigen Aufnahme (201) für den Kopf (101), die in Querrichtung offen für das Einsetzen des besagten Kopfes (101) ist, wobei die Montageeinrichtung **dadurch gekennzeichnet** ist, daß das besagte Rückhaltemittel (200) um eine Achse, die in etwa durch den Mittelpunkt der besagten Aufnahme (201) verläuft, zwischen einer Position für das Einsetzen des Kopfes (101) in der besagten Aufnahme (201) und einer Rückhalteposition für die Sicherung des Kopfes (101) in der Aufnahme (201) schwenkbar ist.

2. Montageeinrichtung nach Anspruch 1 , **dadurch gekennzeichnet,** daß sie ein Verriegelungselement (300) umfaßt, das an dem besagten Rückhaltemittel (200) in seiner Rückhalteposition aufgeklemmt wird, so daß die Queröffnung der besagten Aufnahme (201) mit dem darin befindlichen Kopf (101) verschlossen wird.

3. Montageeinrichtung nach Anspruch 2 , **dadurch gekennzeichnet,** daß das Verriegelungselement (300) einen Anschlußbügel (301) umfaßt, der in einer auf die Stange (100) aufgeschobenen Halteschlaufe (302) endet, um das besagte Verriegelungselement (300) mit der besagten Stange (100) zu verbinden.

4. Montageeinrichtung nach einem der Ansprüche 2 oder 3, **dadurch gekennzeichnet,** daß das Verriegelungselement (300) in etwa eine U-Form aufweist, wobei es an der Innenseite mindestens eines seiner Schenkel (310, 320) einen Haltezahn (311, 321) umfaßt, der mit einem Flachstück (211, 221) zusammenwirkt, das auf dem Rückhaltemittel (200) vorgesehen ist.

5. Montageeinrichtung nach einem der Ansprüche 1 bis 4, **dadurch gekennzeichnet,** daß das Rückhaltemittel (200) eine Schlüsselform mit einem Schwenkansatz (210) und einem Rückhaltestück (220) aufweist, in dem sich die besagte Aufnahme (201) befindet.

6. Montageeinrichtung nach einem der Ansprüche 1 bis 5, **dadurch gekennzeichnet,** daß das besagte Rückhaltemittel (200) an einer Einbauspindel (400) befestigt ist, deren Achse in etwa parallel zur Stange (100) verläuft und die so eingerastet wird, daß sie drehbar in einem Lager (500) gelagert ist, das an einem der zu befestigenden Teile vorgesehen ist.

7. Montageeinrichtung nach einem der Ansprüche 1 bis 6, **dadurch gekennzeichnet,** daß das Lager (500) eine Ausklinkung (502) umfaßt, die mit dem Schwenkansatz (210) zusammenwirkt und eine Begrenzung der Winkelbewegung des besagten Rückhaltemittels (200) zwischen der Einsetzposition und der Rückhalteposition ermöglicht.

8. Montageeinrichtung nach Anspruch 7 , **dadurch gekennzeichnet,** daß die besagte Ausklinkung (502) an einem Ende eine Verstärkung (503) aufweist, um die Verriegelung des besagten Rückhaltemittels (200) in seiner Rückhalteposition herbeizuführen.

9. Dreipunkt-Montagebaugruppe für die Montage eines Teils einer Beleuchtungs- oder Signalvorrichtung eines Fahrzeugs an einem anderen Teil , **dadurch gekennzeichnet,** daß sie mindestens zwei Montageeinrichtungen (10, 20) nach einem der Ansprüche 1 bis 8 umfaßt, wobei die Queröffnungen der Aufnahmen (11ₐ, 21ₐ) der besagten Rückhalteteile (11, 21) unterschiedliche Winkelstellungen in der Rückhalteposition einnehmen können.

10. Dreipunkt-Montagebaugruppe nach Anspruch 9 , **dadurch gekennzeichnet,** daß es sich bei dem dritten Montagepunkt um eine feststehende Montageeinrichtung (30) handelt, die einerseits aus einer Stange (32) besteht, die an einem der zu befestigenden Teile angebracht ist und einen kugelförmigen Kopf (33) umfaßt, und andererseits aus einem feststehenden Rückhaltemittel (31), das an dem anderen Teil angebracht ist und eine in Querrichtung offene Aufnahme (31ₐ) für das Einsetzen des Kopfes (33) umfaßt.

11. Verfahren zur Montage eines Teils einer Beleuchtungs- oder Signalvorrichtung eines Fahrzeugs an einem anderen Teil anhand der Montagebaugruppe nach einem der Ansprüche 9 oder 10, **dadurch gekennzeichnet,** daß es die folgenden Arbeitsschritte umfaßt:
a) die kugelförmigen Köpfe werden in eine Ebene verbracht, in der sich die drei Aufnahmen befinden;
b) die besagten Köpfe werden quer in die besagten Aufnahmen durch ihre Queröffnung eingesetzt;
c) mindestens zwei Rückhaltemittel werden so gedreht, daß die Queröffnungen der drei Aufnahmen unterschiedliche Ausrichtungen aufweisen.
